## Europäisches Patentamt

## European Patent Office

## Office européen des brevets

(11) Numéro de publication: **0 170 588**
**B1**

(12) **FASCICULE DE BREVET EUROPÉEN**

(45) Date de publication du fascicule du brevet:
**29.06.88**

(21) Numéro de dépôt: **85401489.1**

(22) Date de dépôt: **19.07.85**

(51) Int. Cl.⁴: **B 01 J 23/56,** B 01 J 23/89,
B 01 D 53/36

(54) Catalyseur et procédé pour le traitement des gaz d'échappement des moteurs à combustion interne.

(30) Priorité: **30.07.84 FR 8412047**

(43) Date de publication de la demande:
**05.02.86 Bulletin 86/6**

(45) Mention de la délivrance du brevet:
**29.06.88 Bulletin 88/26**

(84) Etats contractants désignés:
**BE CH DE FR GB IT LI NL**

(56) Documents cité:
**EP-A-0 027 069**
**EP-A-0 054 472**
**EP-A-0 100 267**
**DE-A-3 223 500**
**FR-A-2 430 795**
**FR-A-2 449 475**

(73) Titulaire: **SOCIETE FRANCAISE DES PRODUITS POUR CATALYSE PRO- CATALYSE, 4, avenue de Bois Préau, F-92502 Rueil Malmaison (FR)**

(72) Inventeur: **Blanchard, Gilbert, 5, allée des Acacias Lagny- le- Sec, F-60330 Le Plessis Belleville (FR)**
Inventeur: **Prigent, Michel, 11, rue des Maronniers, F-92500 Rueil Malmaison (FR)**

(74) Mandataire: **Savina, Jacques, RHONE- POULENC INTERSERVICES Service Brevets Chimie 25, quai Paul Doumer, F-92408 Courbevoie Cédex (FR)**

EP 0 170 588 B1

**Description**

La présente invention a pour objet des catalyseurs multifonctionnels, plus particulièrement destinés au traitement des gaz d'échappement des moteurs à combustion interne.

On entend par multifonctionnels, selon l'invention, des catalyseurs, opérant l'oxydation en particulier du monoxyde de carbone et des hydrocarbures présents dans les gaz d'échappement ainsi que la réduction simultanée en particulier des oxydes d'azote présents dans ces gaz.

Dans les moteurs à combustion interne à essence, la composition des gaz d'échappement peut être réglée autour d'un équilibre stoechiométrique tel que l'oxydation et la réduction catalytique de ses divers constituants conduisent à de l'eau, du dioxyde de carbone et de l'azote. Les moyens généralement mis en oeuvre pour régler la composition du gaz d'échappement autour de cette stoechiométrie sont notamment le réglage en continu du rapport air/carburant à l'admission du moteur et/ou l'introduction d'oxygène supplémentaire en amont du catalyseur. La composition de gaz d'échappement varie ainsi sur des périodes de l'ordre de la seconde d'une composition contenant un excès relatif de composés oxydants (réglage dit "pauvre") à une composition contenant un excès de composés réducteurs (réglage dit "riche") et réciproquement.

En particulier, le réglage dit "pauvre" est tel que les quantités d'oxygène et d'oxyde d'azote présentes sont supérieures à celles requises pour produire l'oxydation de l'oxyde de carbone, des hydrocarbures et de l'hydrogène présents. Inversement, et en particulier le réglage dit "riche" est tel que les quantités d'oxyde de carbone, d'hydrocarbures et d'hydrogène présentes sont supérieures à celles requises pour produire la réduction de l'oxygène et des oxydes d'azote présents.

Il a déjà été proposé des catalyseurs pour traiter de tels gaz d'échappement.

Ainsi, EP-A-27 069 décrit un catalyseur comportant un support à base d'oxyde réfractaire et une phase active constituée de cérium, de fer, d'au moins un métal pris dans le groupe comportant le platine et le palladium et d'au moins un métal pris dans le groupe comportant l'iridium et le rhodium.

D'après DE-A-2 449 475 on connaît également des catalyseurs multifonctionnels ayant comme phase active du cérium, du fer, du zirconium, du rhodium et du platine.

D'après DE-A-3 223 500, on connaît également des catalyseurs multifonctionnels ayant comme phase active du rhodium, du palladium, du fer et du cérium.

D'après EP-A-100 267, on connaît un catalyseur multifonctionnel pour le traitement des gaz d'échappement d'un moteur à combustion interne, contenant un support imprégné d'au moins un métal du groupe du platine choisi dans le groupe comprenant le platine, le palladium, le ruthénium, le rhodium et l'iridium et d'au moins un métal de base choisi dans le groupe comprenant notamment le cérium, le fer, le zirconium, le cobalt, le nickel, le zinc, le manganèse, le tungstène.

De tels catalyseurs s'avèrent toutefois présenter une stabilité au cours du temps insuffisante pour répondre aux exigences anti-pollution actuelles.

La demanderesse a trouvé de nouveaux catalyseurs multifonctionnels à base de zirconium, de cérium, de palladium et de rhodium remédiant aux inconvénients présentés par les catalyseurs de l'art antérieur et qui s'avèrent, de façon totalement inattendue, présenter une excellente activité ainsi qu'une stabilité remarquable au cours du temps.

La présente invention concerne en effet un catalyseur multifonctionnel caractérisé en ce qu'il comporte un support sur lequel est déposé par imprégnation une phase active constituée de zirconium et de cérium et éventuellement de fer, de palladium et d'au moins un métal pris dans le groupe comportant l'iridium et le rhodium.

Le support mis en oeuvre selon l'invention peut notamment être à base d'oxyde réfractaire sous forme particulaire, le plus couramment employé étant à base d'alumine.

Selon un mode de mise en oeuvre préféré de l'invention, on utilise un support à base de particules d'alumine présentant de préférence une surface spécifique comprise entre 25 et 250 m²/g et, plus particulièrement comprise entre 70 et 150 m²/g. Il présente un volume poreux total de préférence compris entre 0,5 et 2 cm³/g et, plus particulièrement compris entre 0,8 et 1,7 cm³/g. Il possède de préférence une macroporosité telle que le volume poreux des pores dont le diamètre est supérieur à 100 nm est compris entre environ 0,05 et 0,6 cm³/g et, de préférence, entre 0,2 et 0,5 cm³/g.

De tels supports peuvent notamment avoir été fabriqués à partir de l'alumine active obtenue selon le procédé décrit dans US-A-2 915 365 et agglomérée selon le procédé décrit dans US-A-2 881 051.

Ils peuvent également avoir été fabriqués par autoclavage en milieu neutre ou acide des agglomérés précédents, séchage et calcination notamment tel que décrit dans FR-A-1 449 904 et FR-A-1 386 384.

Les supports d'alumine mis en oeuvre peuvent également avoir été fabriqués selon le procédé décrit dans FR-A-2 399 276.

Les supports d'alumine mis en oeuvre peuvent également avoir été fabriqués selon le procédé décrit dans EP-A-15 801.

D'une manière générale, les supports à base de particules d'alumine mis en oeuvre selon l'invention peuvent avoir été traités ainsi qu'il est bien connu de l'homme de l'art par des agents porogènes tels que ceux à base de cellulose, naphtaline, gommes naturelles, polymères synthétiques, etc.. afin de leur conférer les propriétés de porosité désirée.

Le support mis en oeuvre selon l'invention peut également être constitué par un ou plusieurs oxydes recouvrant un substrat métallique ou céramique; ledit substrat étant de préférence sous forme d'une structure inerte et rigide de type monolithique comprenant des canaux ou conduits. De tels supports sont bien connus de l'homme de l'art et ont été largement décrits dans la littérature, les oxydes étant de préférence employés sous forme d'une pellicule ou d'un revêtement appliqué sur le substrat.

Les oxydes constituant le revêtement sont le plus couramment à base d'oxyde d'aluminium.

Les substrats métalliques utilisés sont notamment ceux obtenus à partir d'alliages de fer, de nickel, de chrome, ou ceux obtenus à partir de fer, de chrome, d'aluminium et de cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

On peut avantageusement prétraiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert d'une couche d'aluminium pour obtenir un revêtement d'une couche de diffusion aluminium/fer.

Les substrats en matière céramique utilisés sont notamment ceux comportant comme matière principale la cordiérite, l'alumine, la mullite, la porcelaine, les carbures de bore ou de silicium.

Selon le mode de mise en oeuvre préféré de l'invention, on peut obtenir le revêtement en oxyde d'aluminium de ces substrats céramiques ou métalliques par application d'hydrate d'alumine puis calcination ou par dépôt d'un sel d'aluminium puis calcination ou par application d'une couche d'alumine active puis calcination.

La structure cellulaire peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille, etc..

Par ailleurs, les supports mis en oeuvre selon l'invention sont avantageusement traités de façon à leur conférer une bonne stabilité thermique au cours du temps. Les supports stabilisés décrits dans FR-A-2 257 335 et FR-A-2 290 950 au nom de Rhône-Poulenc conviennent aux fins de l'invention.

La teneur en palladium du catalyseur varie généralement entre environ 0,04 et 3 % en poids par rapport au catalyseur fini et, de préférence, entre environ 0,05 et 0,50 % en poids. Celle en métal du groupe constitué par l'iridium et le rhodium varie généralement entre environ 0,002 et 0,3 % en poids et de préférence entre environ 0,005 et 0,1 % en poids.

Selon un mode de mise en oeuvre particulier des catalyseurs selon l'invention, on préférera utiliser le rhodium associé au palladium.

La teneur totale en cérium de la phase active des catalyseurs selon l'invention est comprise entre environ 0,1 et environ 10 % en poids rapporté au catalyseur fini. Cette teneur est de préférence comprise entre 0,3 et 5,0 %.

La teneur en zirconium de la phase active des catalyseurs selon l'invention est comprise entre environ 0,1 et environ 10 % en poids par rapport au catalyseur fini. Cette teneur est de préférence comprise entre 0,1 et 6 %.

Selon une variante de l'invention, les catalyseurs peuvent en outre comporter l'un au moins des métaux suivants fer, tungstène, nickel, manganèse, étain, germanium, cobalt, uranium, rhénium. La teneur totale en poids de ces métaux rapportés au support est comprise entre environ 0,2 et 5 %.

Les catalyseurs selon l'invention peuvent être préparés selon les méthodes courantes, de préférence, par imprégnation du support au moyen de solution de composés minéraux ou organiques des métaux que l'on désire introduire. L'imprégnation peut être faite au moyen de solutions communes aux métaux ou successivement avec différentes solutions.

Selon un mode de mise en oeuvre particulier, on imprègne successivement le support avec une solution contenant des composés du cérium, du zirconium et éventuellement de fer puis avec une ou des solutions contenant des composés du palladium et du rhodium que l'on désire introduire.

Comme composés du cérium, du zirconium et du fer que l'on peut mettre en oeuvre, on citera notamment les sels de cérium, de zirconium et de fer et plus particulièrement le nitrate céreux, l'acétate céreux, le chlorure céreux, le nitrate cérique ammoniacal, le nitrate de zirconyle, le tétrachlorure de zirconium, le nitrate ferrique, le nitrate de fer ammoniacal et le chlorure ferrique.

Comme composés du rhodium, du palladium que l'on peut mettre en oeuvre, on citera notamment le trichlorure de rhodium hydraté, le chlorure de palladium, le nitrate de palladium ainsi que le dichlorure de rhodium III chloropentamine et le dichlorure de palladium II tétramine.

Lorsque l'on met en oeuvre un support à base d'oxyde réfractaire et en particulier d'oxyde d'aluminium, la profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique, oxalique.

Après imprégnation du support, le catalyseur est ensuite séché puis activé dans un courant d'air à une température comprise entre environ 300 et 800°C pendant quelques heures.

Lorsque l'on met en oeuvre un support constitué en particulier d'un revêtement d'alumine déposé sur un substrat métallique ou en matière céramique, on opère avantageusement en mettant en contact le substrat avec une dispersion aqueuse d'un précurseur d'alumine qui contient en plus des sels ou oxydes de cérium, de zirconium et éventuellement de fer, on sèche puis on calcine à 300 - 700°C environ, on répète éventuellement ces opérations, puis ont introduit les métaux précieux et on termine les opérations de la façon qui a été explicitée ci-dessus dans le cas des supports à base de particules d'oxyde réfractaire.

On a constaté que les catalyseurs selon l'invention permettent d'éliminer très efficacement la majeure partie de l'oxyde de carbone, des hydrocarbures imbrûlés ainsi que des oxydes d'azote présents dans les gaz d'échappement des moteurs à combustion interne et que, de plus, ils possèdent une stabilité remarquable au cours du temps.

Cette stabilité remarquable au cours du temps des catalyseurs de l'invention, peut être mesurée par la quantité de monoxyde de carbone chimisorbée sur les catalyseurs après vieillissement à haute température, par exemple 850°C pendant 100 heures. Ainsi les catalyseurs de l'invention s'avèrent présenter de façon totalement inattendue un pouvoir d'adsorption du monoxyde de carbone très elevé. Au sens de l'invention, on entend par catalyseur adsorbant fortement le monoxyde de carbone des catalyseurs vieillis à 850°C pendant 100 heures pour lesquels le volume de monoxyde de carbone adsorbé représente au moins 60 % du volume théorique de monoxyde de carbone calculé à partir de la relation

V théorique = 11 200 x N en $cm^3$ NTP,

avec N le nombre d'atomes grammes de platine, de rhodium et de palladium contenus dans l'échantillon utilisé pour la mesure de l'adsorption du monoxyde de carbone qui contient

P 1 g de platine, P 2 g de rhodium et P 3 g de palladium

$$N = \frac{P1}{195,09} + \frac{P2}{102,905} + \frac{P3}{106,40}$$

(le test de chimisorption du CO est décrit ci-après à l'exemple 7).

Les exemples non limitatifs donnés ci-après illustrent l'invention et, en particulier, les avantages des présents catalyseurs par rapport à ceux décrits dans l'art antérieur.

## EXEMPLE 1 - PREPARATION D'UN CATALYSEUR (A) DE L'ART ANTERIEUR

On prépare un liant et une charge d'alumine selon le procédé décrit dans EP-A-73 703.

On prépare un liant d'alumine (I) de la façon suivante:

5 000 g d'alumine obtenue par des hydration d'hydrargillite dans un courant de gaz chaud à 800°C, pendant 0,5 seconde, sont introduits dans un autoclave contenant une solution d'acide nitrique à pH = 1. On chauffe la suspension en l'agitant pendant 4 heures à 180°C. La suspension obtenue, qui constitue le liant d'alumine (I) est séchée par atomisation, à 150°C afin de le mettre sous forme de poudre; cette poudre présente aux rayons X une structure de boehmite fibrillaire.

Une partie de cette poudre est calcinée sous air à 600°C pendant 2 heures pour obtenir la charge d'alumine (I).

On disperse 200 g de liant d'alumine (I) sous forme de poudre dans 2 000 $cm^3$ d'eau distillée, on agite pendant 10 minutes puis on rajoute 800 g de charge d'alumine (I), on agite encore pendant 10 minutes. La viscosité de la suspension obtenue est de 25 centipoises. Cette suspension est utilisée pour le revêtement d'une structure monolithe céramique de 1,98 litre vendue par la société CORNING, présentant 400 cellules par Square Inch, le monolithe de 1,98 litre est plongé dans la suspension à pH: 3,4 contenant 30 % en poids d'alumine.

Le support précédemment cité est égoutté et séché pour que les canaux soient vidés, puis il est calcine à 600°C durant 3 heures. Le monolithe ainsi revêtu est immergé dans une solution aqueuse de nitrate de cérium pendant 30 minutes, puis il est égoutté et séché à 150°C et calciné à 700°C durant 3 heures. La concentration en nitrate de cérium dans la solution est telle que, après immersion et calcination, le monolithe contient 8,0 % en poids de cérium.

Le substrat est ensuite imprégné par trempage dans une solution aqueuse de nitrate de palladium et de trichlorure de rhodium hydraté.

Les concentrations en nitrate de palladium et en trichlorure de rhodium sont telles que le monolithe est imprégné par 2,0 g de palladium et 0,10 g de rhodium. Après 30 minutes de contact, le monolithe est séché à 150°C puis activé à 500°C pendant 3 heures dans un four de calcination.

Le catalyseur (A) ainsi préparé contient en poids rapporté au catalyseur monolithique 0,200 % de palladium, 0,10 % de rhodium et 8 % de cérium.

## EXEMPLE 2 - PREPARATION D'UN CATALYSEUR (B) DE L'ART ANTERIEUR

On prépare un liant d'alumine (II) selon le procédé décrit dans EP-A-15 801.

On procède à la fabrication d'un gâteau de gel d'alumine par précipitation en continu d'une solution d'aluminate de sodium par une solution d'acide nitrique. Le gâteau de sel est essoré, filtré, lavé puis traité à 115°C pendant 24 heures dans un autoclave agité. Le produit obtenu se présente sous forme de pâte contenant 12 % d'alumine comptée en $Al_2O_3$. La photographie de ce produit obtenue au microscope électronique montre qu'il est constitué de boehmite ultra-fine entièrement fibrillaire composée de monocristaux de dimension 50 à 100 nm. La pâte contenant 12 % d'alumine est séchée par atomisation à 250°C afin de la mettre sous forme de poudre de liant d'alumine.

On prépare une charge d'alumine (II) de la façon suivante: on prépare 900 g de billes d'alumine de structure gamma préparées selon les procédés décrits dans FR-A-1 449 904 et FR-A-1 386 364 par autoclavage en présence d'acide d'agglomérés d'alumine active, séchage et calcination. Ces billes d'alumine obtenues présentent une surface spécifique de 100 m$^2$/g, un volume poreux total de 0,90 cm$^3$/g et un volume de 0,40 cm$^3$/g constitué par des macropores ayant un diamètre supérieur à 100 µm. Ces billes sont imprégnées par 800 cm$^3$ d'une solution aqueuse de nitrate ferrique contenant 70 g de fer.

Après 30 minutes de contact les billes sont séchées à 150°C puis calcinées sous air à 700°C pendant 3 heures.

Elles sont ensuite broyées pendant une heure dans un broyeur à boulets.

Les caractéristiques de la charge d'alumine (II) obtenue sont les suivantes:
- Taux de dispersion: 5 %
- Répartition granulométrique: le diamètre moyen des particules est de 7 microns.

On disperse 100 g de liant d'alumine (II) vous forme de poudre dans 2000 cm$^3$ d'eau distillée, on agite pendant 10 minutes, puis on rajoute 900 g de charge d'alumine (II), on agite encore pendant 10 minutes. La viscosité de la suspension obtenue est de 30 centipoises.

Cette suspension est utilisée pour le revêtement d'une structure monolithe métallique de 1,2 litre fabriqué à partir d'une feuille métallique connue sous la marque FECRALLOY. Le monolithe est plongé dans la suspension à pH = 3,5 puis il est égoutté, soufflé et séché pour que les canaux soient vidés, puis il est calciné à 500°C durant 3 heures. Le substrat est ensuite imprégné par trempage dans une solution aqueuse de nitrate de palladium et de trichlorure de rhodium hydraté dont les concentrations sont telles que le monolithe est imprégné par 3,0 g de palladium et 0,3 g de rhodium. Après 30 minutes de contact, le monolithe est égoutté, soufflé et séché à 150°C puis activé à 500°C pendant 3 heures dans un four de calcination. Le catalyseur (B) ainsi préparé contient en poids rapporté au catalyseur monolithique 0,200 % de palladium, 0,020 % de rhodium, 3,5 % de fer imprégnés sur le revêtement d'alumine.

## EXEMPLE 3 - PREPARATION D'UN CATALYSEUR (C) DE L'ART ANTERIEUR

On prépare 100 g de billes d'alumine selon le procédé décrit dans FR-A-2 449 474.

Ces billes présentent une surface spécifique de 100 m$^2$/g, un volume poreux total de 1,20 cm$^3$/g et un volume de 0,45 cm$^3$/g constitué par des macropores ayant un diamètre supérieur à 100 nm.

Ces billes sont imprégnées par 120 cm$^3$ d'une solution aqueuse de nitrate céreux, de nitrate de zirconyle et de nitrate ferrique, contenant 2,0 g de cérium, 3,5 g de zirconium et 1,0 g de fer.

Après 30 minutes de contact, les billes sont séchees à 150°C puis calcinées sous air à 700°C pendant 3 heures.

Elles sont ensuite imprégnées par 110 cm$^3$ d'une solution d'acide hexachloroplatinique, de trichlorure de rhodium hydraté contenant 200 mg de platine et 10 mg de rhodium.

Après 30 minutes de contact, les billes sont séchées à 150°C puis calcinées à 500°C pendant 3 heures dans un courant d'air circulant à 200 litres par heure.

Le catalyseur (C) ainsi préparé contient en poids rapporté au support 0,200 % de platine, 0,010 % de rhodium, 2,0 % de cérium, 3,5 % de zirconium et 1 % de fer.

## EXEMPLE 4 - PREPARATION D'UN CATALYSEUR (D) SELON L'INVENTION

On prépare une suspension d'alumine telle que décrite à l'exemple 1.

Cette suspension est utilisée pour le revêtement d'une structure céramique comme à l'exemple 1.

Le monolithe revêtu comme à l'exemple 1 est immergé dans une solution aqueuse de nitrate de cérium et de nitrate de zirconium dont les concentrations sont telles que, après immersion et calcination, le monolithe contient 2,5 % en poids de cérium et 5,5 % en poids de zirconium.

Le substrat est ensuite imprégné et calciné comme à l'exemple 1.

Le catalyseur (D) ainsi préparé contient en poids rapporté au catalyseur monolithique 0,20 % de palladium, 0,010 % de rhodium, 2,5 % de cérium et 5,5 % de zirconium.

## EXEMPLE 5 - PREPARATION D'UN CATALYSEUR (E) SELON L'INVENTION

On prépare un liant d'alumine (II) tel que décrit à l'exemple 2.

On prépare une charge d'alumine (III) de la façon décrite à l'exemple 2 par imprégnation de 300 g de billes d'alumine par 800 cm$^3$ d'une solution aqueuse de nitrate ferrique, de nitrate céreux et de nitrate de zirconyle contenant 30 g de fer, 70 g de cérium et 70 g de zirconium.

Une structure monolithe métallique de 1,2 litre est revêtue par la suspension de liant d'alumine (I) et de charge d'alumine (III) de la façon décrite à l'exemple 2. Le substrat est ensuite imprégné et calciné comme à l'exemple 2.

Le catalyseur (E) ainsi préparé contient en poids rapporté au catalyseur monolithique 0,200 % de palladium, 0,020 % de rhodium, 1,5 % de fer, 3,5 % de cérium et 3,5 % de zirconium imprégnés sur le revêtement d'alumine.

## EXEMPLE 6 - PREPARATION D'UN CATALYSEUR (F) SELON L'INVENTION

On imprègne 100 g de billes d'alumine de la façon décrite à l'exemple 3 par une solution aqueuse de nitrate céreux, de nitrate de zirconyle et de nitrate ferrique contenant 2,0 g de cérium, 3,5 g de zirconium et 1,0 g de fer.

Après 30 minutes de contact, les billes sont séchées à 150°C puis calcinées sous air à 750°C pendant 3 heures.

Elles sont ensuite imprégnées par 110 cm$^3$ d'une solution de nitrate de palladium de trichlorure de rhodium hydraté contenant 320 mg de palladium et 16 mg de rhodium.

Après 30 mn de contact, les billes sont séchées à 150°C puis activées à 500°C pendant 3h dans un courant d'air circulant à 200 litres par heure.

Le catalyseur (F) ainsi préparé contient en poids rapporté au support: 0,320 % de palladium, 0,016 % de rhodium, 2,0 % de cérium, 3,5 % de zirconium et 1,0 % de fer.

## EXEMPLE 7 - CHIMISORPTION DU MONOXYDE DE CARBONE SUR LES DIVERS CATALYSEURS VIEILLIS A HAUTE TEMPERATURE

Le présent exemple ressemble les résultats obtenus pour la chimisorption du monoxyde de carbone avec les divers catalyseurs (A), (B), (C), (D), (E) et (F) décrits respectivement dans les exemples 1, 2, 3, 4, 5 et 6.

1) <u>Les conditions du test de chimisorption du monoxyde de carbone sont les suivantes</u>

On réduit d'abord un échantillon de 10 cm$^3$ du catalyseur à 350°C sous un courant d'hydrogène. On élimine l'hydrogène adsorbé sur le catalyseur en le balayant par un courant d'argon très pur à la même température. Le solide ainsi obtenu est ramené à la température ambiante, toujours sous un balayage d'argon très pur. En amont du catalyseur, on introduit, dans le courant d'argon (1,8 l/h), des volumes connus de monoxyde de carbone.

La chimisorption s'effectuant en dynamique, on utilise une cellule de mesure à conductivité thermique pour déterminer l'évolution de la quantité de monoxyde de carbone résiduelle dans le gaz porteur. La surface du "pic" de CO obtenue est proportionnelle à la quantité de CO qui reste dans l'effluent gazeux. Les injections successives de CO sont poursuivies jusqu'à obtention de pics ayant la même surface. Cette surface qui correspond au volume de CO introduit à chaque injection est prise comme référence.

Si $n$ - est le nombre d'injections avant d'obtenir les pics à "surface constante"

$V$ - le volume injecté à chaque fois en cm$^3$

$S_1$ - la surface de la ième injection

$S$ - la surface du pic invariant

la quantité de CO fixé par le catalyseur est, en cm$^3$:

FIG00/25

le volume injecté ramené aux conditions normales de température et de pression (TPN) est:

$$(TPN) = \frac{760 \times 273}{P \times (273 + T°)}$$

avec P - Pression en mm de mercure
et T° = température du monoxyde de carbone adsorbé en °C.

2) <u>Conditions de vieillissement des catalyseurs (A), (B), (C), (D), (E) et (F) décrits respectivement dans les exemples 1 à 6</u>

La procédure utilisée consiste à porter les catalyseurs sous balayage d'un mélange composé de 90 % d'azote et 10 % d'eau à 850°C pendant 100 heures. Cette procédure est utilisée pour simuler le frittage de la phase métallique des catalyseurs testés en endurance ou banc moteur pendant 600 heures lorsque le cycle de vieillissement comporte un palier de 10 minutes à 850°C par cycle d'une heure comme celui décrit à l'exemple

8.

3) <u>Résultats obtenus avec les catalyseurs (A), (B), (C), (D), (E), (F) pour la chimisorption du monoxyude de carbone</u>

| | Numéro de l'exemple | Référence du catalyseur | CO chimisorbé * | V théorique Cm³ NTP | V chimisorbé |
|---|---|---|---|---|---|
| | | | | | V théorique en % |
| Art antérieur | 1 | A | 0,31 | 1,12 | 27,7 |
| | 2 | B | 0,66 | 2,90 | 22,8 |
| | 3 | C | 0,12 | 0,628 | 19,1 |
| Invention | 4 | D | 0,86 | 1,12 | 76,8 |
| | 5 | E | 2,11 | 2,90 | 72,7 |
| | 6 | F | 1,18 | 1,77 | 66,6 |

\* Quantité de monoxyde de carbone chimisorbé par le catalyseur mesuré dans les conditions TPN en cm³/10 cm³ catalyseur.

On peut constater que la quantité de monoxyde de carbone chimisorbé par les catalyseurs préparés selon l'invention est, dans tous les cas supérieure à celle des catalyseurs préparés selon l'art antérieur, ce qui signifie que l'accessibilité des particules de palladium dans les catalyseurs, selon l'invention, calcinés à haute température est, dans tous les cas, supérieure à l'accessibilité des particules de palladium ou de platine dans les catalyseurs de l'art antérieur vieillis dans les mêmes conditions.

## EXEMPLE 8 - TENUE EN ENDURANCE DES CATALYSEURS A, B, C, D, E et F POUR L'ELIMINATION SIMULTANEE DU MONOXYDE DE CARBONE, DES HYDROCARBURES ET DES OXYDES D'AZOTE DANS LES GAZ D'ECHAPPEMENT D'UN MOTEUR FONCTIONNANT A LA RICHESSE 1 SUR UN BAND D'ESSAIS

Le moteur utilisé pour ces essais est un moteur Renault 18 type USA d'une cylindrée de 1647 cm³ muni d'une alimentation par injection d'essence de marque BOSCH L-JETRONIC régulée à la richesse 1 grâce à une sonde à oxygène placée en sortie du collecteur d'echappement

Le carburant consommé par le moteur dans ces essais est de l'essence sans plomb contenant toutefois une teneur résiduelle en plomb ajustée dans tous les cas à 0,013 g/litre.

Le moteur étant accouplé à un frein dynamométrique, le régime de rotation et la charge imposés au moteur sont réglés de manière que le cycle de vieillissement est compose de deux séquences successives:
- une première phase de 10 minutes avec un débit de gaz d'échappement de 180 Nm³/h et une température en entrée du pot catalytique de 850 ± 10°C
- une seconde phase de 50 minutes avec un débit de gaz d'échappement de 85 Nm³/h et une température en entrée du pot catalytique de 475 ± 10°C.

Les performances des catalyseurs sont déterminées après 35 minutes de stabilisation dans la seconde phase à 475 ± 10°C.

Pour l'essai des catalyseurs en billes, un pot catalytique expérimental du type à circulation radiale d'un volume de 1700 cm³ réalise selon le principe décrit dans FR-A-2 270 444 a été adapté sur la ligne d'échappement à une distance d'environ 1,20 m du moteur. Les catalyseurs sur monolithes ont été montés dans des enveloppes métalliques soudées et installées sur la ligne d'échappement à une distance d'environ 0,80 m du moteur.

La mesure du taux d'élimination de chacun des trois polluants est effectuée périodiquement à 475 ± 10°C par l'analyse des gaz en amont et en aval des pots.

Le tableau I ci-dessous rassemble les résultats obtenus au départ de l'essai et après 600 heures de marche.

On peut constater que la stabilité de l'activité des catalyseurs préparés selon l'invention est notablement améliorée par rapport à celle des catalyseurs préparé selon l'art antérieur.

## TABLEAU 1

| | Numéro de l'exemple | Référence du catalyseur | Epuration initiale en % | | | Epuration après 600 h en % | | |
|---|---|---|---|---|---|---|---|---|
| | | | CO | HC | $NO_x$ | CO | HC | $NO_x$ |
| Art antérieur | 1 | A | 97,3 | 95,1 | 91,0 | 87,4 | 80,7 | 79,5 |
| | 2 | B | 97,7 | 96,5 | 93,0 | 88,0 | 81,0 | 84,5 |
| | 3 | C | 98,5 | 97,3 | 91,8 | 84,0 | 75,5 | 80,2 |
| Invention | 4 | D | 96,5 | 95,5 | 89,0 | 94,5 | 90,1 | 86,5 |
| | 5 | E | 97,1 | 96,3 | 93,2 | 90,7 | 87,8 | 89,9 |
| | 6 | F | 98,0 | 98,1 | 94,5 | 93,2 | 90,5 | 87,7 |

## Revendications

1. Catalyseur multifonctionnel caractérisé en ce qu'il comporte: un support sur lequel est déposé par imprégnation une phase active constituée de zirconium et de cérium et éventuellement de fer, de palladium et d'au moins un métal pris dans le groupe comportant l'iridium et le rhodium.

2. Catalyseur selon la revendication 1 caractérisé en ce que la teneur en palladium est comprise entre 0,04 et 3 % en poids.

3. Catalyseur selon la revendication 2 caractérisé en ce que la teneur est comprise entre 0,05 et 0,5 %.

4. Catalyseur selon la revendication 1 caractérisé en ce que la teneur en métal du groupe constitué par l'iridium et le rhodium est comprise entre 0,002 % et 0,3 % en poids.

5. Catalyseur selon la revendication 4 caractérisé en ce que cette teneur est comprise entre 0,005 % et 0,1 %.

6. Catalyseur selon la revendication 1 caractérisé en ce que la teneur en cérium et en zirconium est comprise entre 0,1 et 10 %.

7. Catalyseur selon la revendication 6 caractérisé en ce que la teneur en cérium est comprise entre 0,3 et 5 %.

8. Catalyseur selon la revendication 6 caractérisé en ce que la teneur en zirconium est comprise entre 0,1 et 6 %.

## Patentansprüche

1. Multifunktioneller Katalysator, dadurch gekennzeichnet, daß er beinhaltet:
einen Träger, auf dem durch Imprägnierung eine aktive Phase bestehend aus Zirkonium und Cer und gegebenenfalls Eisen, aus Palladium und wenigstens einem Metall aus der Gruppe bestehend aus Iridium und Rhodium niedergeschlagen ist.

2. Katalysator nach Anspruch 1, dadurch gekennzeichnet, daß der Gehalt an Palladium zwischen 0,04 und 3 Gew.-% beträgt.

3. Katalysator nach Anspruch 2, dadurch gekennzeichnet, daß der Gehalt zwischen 0,05 und 0,5 % liegt.

4. Katalysator nach Anspruch 1, dadurch gekennzeichnet, daß der Gehalt an Metall(en) der Gruppe bestehend aus Iridium und Rhodium zwischen 0,002 % und 0,3 Gew.-% liegt.

5. Katalysator nach Anspruch 4, dadurch gekennzeichnet, daß dieser Gehalt zwischen 0,005 % und 0,1 % liegt.

6. Katalysator nach Anspruch 1, dadurch gekennzeichnet, daß der Gehalt an Cer oder Zirkonium zwischen 0,1 und 10 % liegt.

7. Katalysator nach Anspruch 6, dadurch gekennzeichnet, daß der Gehalt an Cer zwischen 0,3 und 5 % liegt.

8. Katalysator nach Anspruch 6, dadurch gekennzeichnet, daß der Gehalt an Zirkon zwischen 0,1 und 6 % liegt.

## Claims

1. Multifunctional catalyst characterized in that it comprises: a support onto which there is deposited by impregnation an active phase consisting of zirconium and of cerium and optionally of iron, of palladium and of at least one metal taken from the group comprising iridium and rhodium.

2. Catalyst according to Claim 1, characterized in that the concentration of palladium is betveen 0,04 and 3 % by weight.

3. Catalyst according to Claim 2, characterized in that the concentration is between 0,05 and 0,5 %.

4. Catalyst according to Claim 1, characterized in that the concentration of the metal of the group consisting of iridium and rhodium is between 0,002 % and 0,3 % by weight.

5. Catalyst according to Claim 4, characterized in that this concentration is between 0,005 % and 0,1 %.

**0 170 588**

6. Catalyst according to Claim 1, characterized in that the concentration of cerium or of zirconium is between 0,1 and 10 %.

7. Catalyst according to Claim 6, characterized in that the concentration of cerium is between 0,3 and 5 %.

8. Catalyst according to Claim 6, characterized in that the concentration of zirconium is between 0,1 and 6 %.